# EUROPEAN PATENT SPECIFICATION

(11) **EP 4 003 792 B1**
(45) Date of publication and mention of the grant of the patent: **01.10.2025**
(21) Application number: 20848089.7
(22) Date of filing: 29.07.2020
(51) Int. Cl.: B60R 19/34

(54) **VEHICLE BUMPER EXTENSION WITH CRUSH CAN BRACING**
FAHRZEUGSTOSSSTANGENVERLÄNGERUNG MIT PRALLBOXAUSSTEIFUNG
EXTENSION DE PARE-CHOCS DE VÉHICULE AVEC RENFORCEMENT DE CAISSON DÉFORMABLE

(30) Priority: 29.07.2019 US 201962879786 P
(43) Date of publication of application: 01.06.2022
(73) Proprietor: Shape Corp., Grand Haven, MI 49417 (US)
(72) Inventor: ALVAREZ, Alfonso, 92100 Boulogne-Billancourt (FR); ANQUETIL, Stephane, 78150 Le Chesnay (FR)
(74) Representative: Müller Schupfner & Partner Patent- und Rechtsanwaltspartnerschaft mbB (Muc)
(86) International application number: PCT/US2020/043929
(87) International publication number: WO 2021/021842

(56) References cited:
- DE-A1- 102008 039 513
- DE-A1- 102013 000 269
- DE-A1- 102016 200 983
- JP-A- H10 203 411
- US-A1- 2014 008 924
- US-A1- 2014 367 985
- US-A1- 2016 059 810

## Description

### TECHNICAL FIELD

The present disclosure relates to impact energy absorbing support structures for vehicles, and more particularly to a bumper assembly mounted at the end of a motor vehicle.

### BACKGROUND

Vehicles are subjected to various crash tests that are mandated by government regulations and insurance certifications, such as tests for impact energy management and absorption from high speed and low speed crash impacts at various locations on the vehicle. The results of these tests may be dependent on various vehicle components and structural designs, including the construction of bumper assemblies.

The document DE102016200983A1 discloses a vehicle bumper assembly according to the preambles of claims 1 and 13.

### SUMMARY

The present disclosure provides corner reinforcements for a vehicle bumper assembly. In an implementation of the disclosure, the bumper assembly includes a bumper reinforcement beam and crush cans that support end portions of the reinforcement beam. A corner reinforcement of the bumper assembly may include an extension member and an impact brace that reinforces the extension member. The extension member protrudes outboard from an end portion of the reinforcement beam and the impact brace connects between the extension member and the associated crush can. The extension member may be angled rearward from the reinforcement beam, such as to accommodate packaging space limitations of the vehicle. The corner reinforcements function to reinforce the outboard end portions of the bumper beam when undergoing impact loads that overlap the crush can, such as for partially laterally offset frontal collisions. The corner reinforcements may also function to provide a generally homogeneous contact surface for the bumper assembly at the impacted mass, which may distribute impact loads across the contact surface of the bumper assembly in a substantially even or consistent manner. For instance, when undergoing such an impact, the extension member may transition into alignment with to reinforcement beam to form the homogeneous contact surface.

According to one aspect of the present disclosure, a vehicle bumper assembly includes a reinforcement beam and a crush can that has a front portion attached to the reinforcement beam. An extension member is attached to an end portion of reinforcement beam. The extension member has a front face that is disposed at a rearward angle relative to an impact face of the reinforcement beam. An impact brace extends between the extension member and a rear portion of the crush can. The impact brace has a crush profile with a higher initial impact resistance than the crush can, such that the impact brace is configured to reduce the rearward angle between the front face of the extension member and the impact face of the reinforcement beam upon undergoing a frontal impact with a mass that overlaps at least the extension member and the crush can

In some implementations, when undergoing a frontal impact, the impact brace and crush can together are configured for an outboard portion of the extension member that is supported by the impact brace to deform rearward at a rate that is slower than an inboard portion of the extension member that is attached to the reinforcement beam at or near the crush can. For example, the crush can may deform rearward prior to generally any rearward deformation of the impact brace, such as to postpone deformation of the impact brace until the longitudinal extent of the reinforcement beam generally aligns with the extension member. According to the invention, the impact brace has a crush initiator disposed at an intermediate portion of the impact brace between the extension member and the crush can. The crush initiator may be configured to cause the intermediate portion of the impact brace to bend outward at the crush initiator, which may cause a front end of the impact brace that is attached to the extension member to move rearward under impact loads at a rate that corresponds with compression of the crush can, so as to maintain the alignment of the extension member and the reinforcement beam.

According to another aspect of the present disclosure, a vehicle bumper assembly includes a reinforcement beam and a crush can that is attached to the reinforcement beam. An extension member is coupled with an end portion of reinforcement beam. An impact brace is coupled between the extension member and a rear portion of the crush can. When undergoing a frontal impact with a mass, the impact brace and crush can are configured to deform rearward in a manner that causes a front face of the extension member to generally align with an impact face of the reinforcement beam so as to provide a generally homogeneous contact surface at the impacted mass.

According to a further aspect of the present disclosure, a corner reinforcement for a bumper assembly includes an extension bracket and an impact brace. The extension bracket has an inboard portion that is configured to attach to an end portion of a reinforcement beam. The extension bracket also has an outboard portion with a front face that is disposed at an angle relative to inboard portion of the extension bracket, such an arrangement positions the front face at a rearward angle relative to an impact face of the corresponding reinforcement beam. The impact brace has a front portion attached to the outboard portion of the extension bracket a rear portion that is configured to attach to a crush can that supports the corresponding reinforcement beam. Upon undergoing a frontal impact with a mass that overlaps the extension bracket, the impact brace is configured to support the extension member so that the rearward angle is reduced between the front face of the extension member and the impact face of the reinforcement beam.

The details of one or more implementations of the disclosure are set forth in the accompanying drawings and the description below. Other aspects, advantages, purposes, and features will be apparent upon review of the following specification in conjunction with the drawings.

### BRIEF DESCRIPTION OF THE DRAWINGS

FIG. 1 is a schematic side elevation view of a vehicle having a bumper assembly;
FIG. 2 is a front perspective view of a bumper assembly;
FIG. 3 is an upper, front perspective view of an end section of the bumper assembly shown in FIG. 2, taken at section IV;
FIG. 4 is an upper, rear perspective view of the end section of the bumper assembly shown in FIG. 3;
FIGS. 5A-5F are top plan views of the end section of the bumper assembly shown in FIG. 3, illustrating iterative stages of crush as a result of a frontal impact with a movable progressive deformable barrier;
FIG. 6 is a top plan view of the end section of the bumper assembly shown in FIG. 3 in an intermediate stage of crush as a result of a frontal impact with a movable progressive deformable barrier; and
FIG. 7 is a chart showing exemplary results of the load and displacement of the bumper assembly shown undergoing the impact depicted in FIGS. 5A-5F.

Like reference symbols in the various drawings indicate like elements.

### DETAILED DESCRIPTION

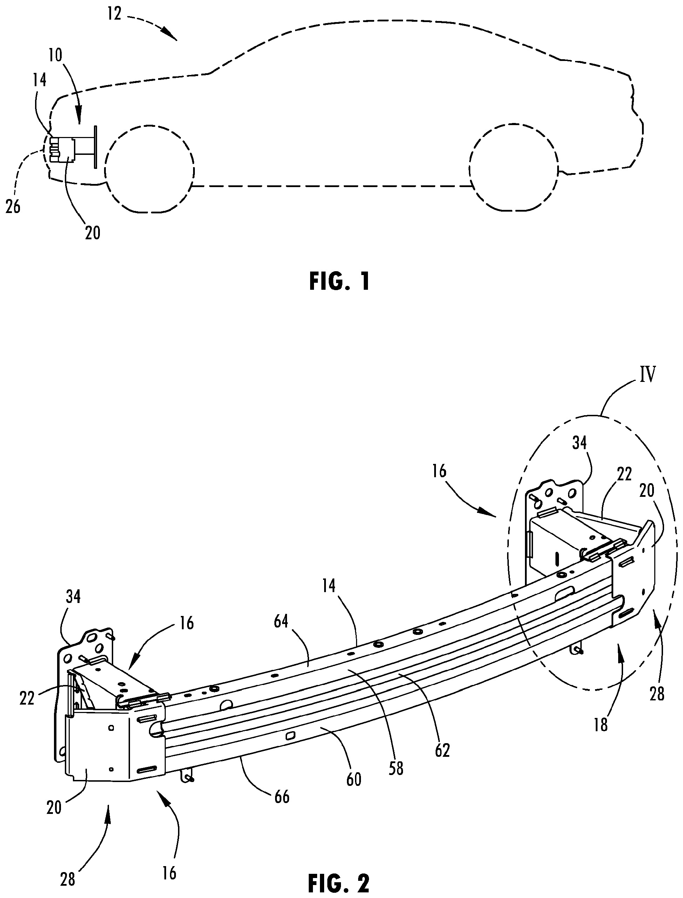

Referring now to the drawings and the illustrative embodiments depicted therein, a bumper assembly 10 for a vehicle 12, such as shown in FIG. 1, includes a bumper reinforcement beam 14 and crush cans 16 that are attached to end portions 18 of the reinforcement beam 14 at generally equal spacing from a center of the reinforcement beam 14. The crush cans 16 of the bumper assembly 10 are each configured to mount to an end or tip of a frame rail or other supportive portion of a vehicle frame to position the reinforcement beam 14 so that it spans laterally across a front end of the motor vehicle 12, such as shown in FIG. 1. While the bumper assembly 10 shown in FIG. 1 is mounted at the front end of the vehicle 12, it is contemplated that other examples of the bumper assembly and components thereof may be used or otherwise incorporated into a bumper assembly that is mounted at a rear end of a vehicle. Moreover, the vehicle 12 shown in FIG. 1 with the bumper assembly 10 is a passenger car, but it is understood that other examples of the bumper assembly disclosed herein may be adapted for different types of vehicles, such as trucks, buses, sport utility vehicles, station wagons, mini-vans, and other motor driven vehicles or the like.

As shown in FIGS. 2-4, the bumper assembly 10 is provided with corner reinforcements 28 at each end portion 18 of the reinforcement beam 14. The corner reinforcements 28 include an extension member 20 and an impact brace 22 that reinforces the extension member 20. The extension member 20 protrudes outboard from the end portion 18 of the reinforcement beam 14 and the impact brace 22 connects between the extension member 20 and the associated crush can 16. The extension member 20 may be angled rearward from the reinforcement beam 14, such as to accommodate packaging space limitations behind the bumper fascia 26 at the front end of the vehicle. The corner reinforcements 28 function to reinforce the outboard ends of the bumper assembly when undergoing impact loads that overlap the ends of the reinforcement beam 14 and crush can 16, such as for partially laterally offset frontal collisions or the like.

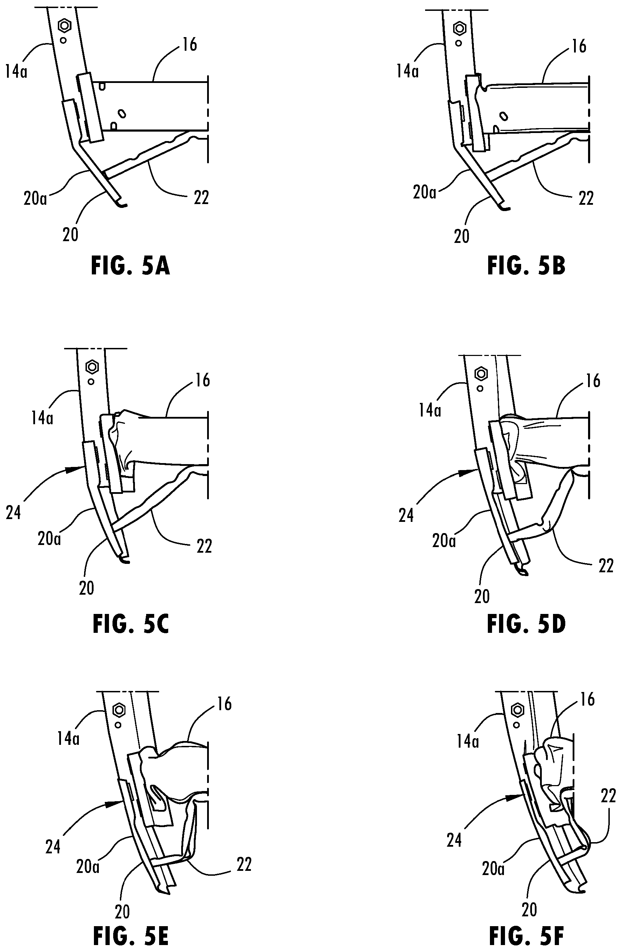

Impact testing for vehicles may be administered in various ways and with different test standards, such as those developed by bodies like the Insurance Institute for Highway Safety (IIHS), the National Highway Traffic Safety Administration (NHTSA), and the Research Counsel for Vehicle Repairs. For example, IIHS administers a Small Overlap Rigid Barrier (SORB) test that provides an impact that covers about 25% of the bumper at a distance about 25% from the longitudinal centerline of the vehicle. As another example, a movable progressive deformable barrier (MPDB) test also provides impacts that occur at least partially outboard from the crush can, such as shown in FIGS. 5A-5F. It can be advantageous in such MPDB testing to distribute impact loads substantially evenly or consistently across a contact surface of the bumper assembly, such as to minimize the intrusion distance longitudinally into vehicle as a result of the impact loads.

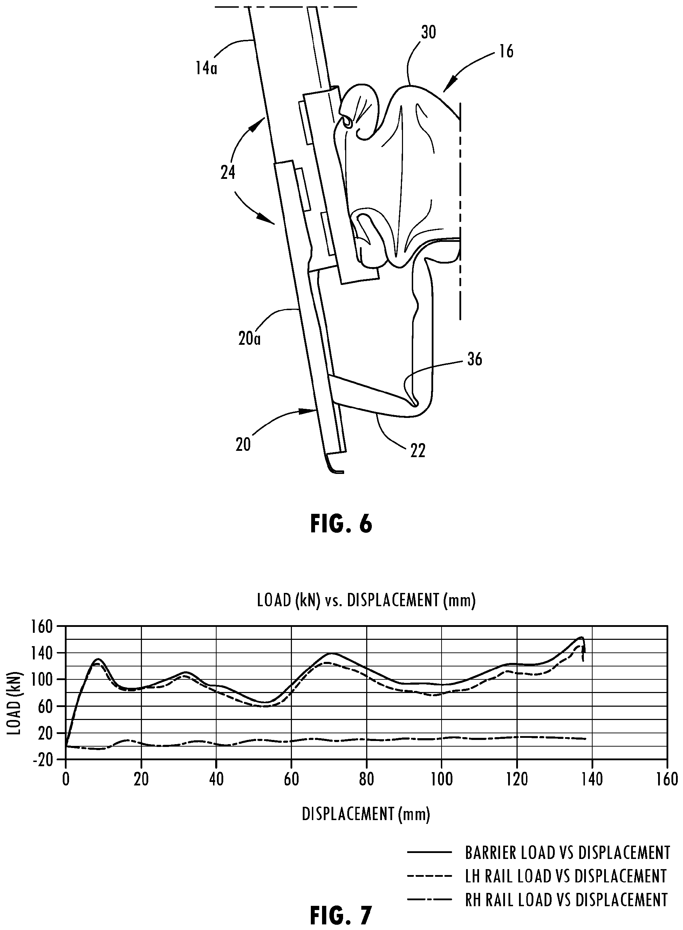

The corner reinforcements 28 may also function to provide a generally homogeneous contact surface for the bumper assembly 10 at an impacted deformable mass. For example, when undergoing an impact, such as a frontal collision with a deformable mass that overlaps the end portion of the bumper assembly, the extension member 20 may transition into general alignment with the reinforcement beam 14, as shown in FIG. 6, to form a generally homogeneous contact surface 24. The generally homogeneous contact surface 24 is formed at the bumper assembly's interface with the impacted mass by the initial impact force causing an impact face 14a of the reinforcement beam 14 to deform rearward and generally align with a front face 20a of the extension member 20, such as shown in FIG. 5C.

In the example shown in FIGS. 5A-5F, the front face 20a of the extension member 20 generally aligns with the impact face 14a to provide the generally homogeneous contact surface 24 after the length of the crush can 16 has axially deformed or crushed to approximately 80% to 60% of the initial length. In other examples the length may be axially deformed or crushed to approximately 90% to 30% of the initial length to provide a generally homogeneous contact surface along the front face of an extension member and the impact face of the reinforcement beam. In further implementations the length may be axially deformed or crushed to approximately 70% to 50% of the initial length to provide a generally homogeneous contact surface along the front face of an extension member and the impact face of the reinforcement beam. Moreover, in some implementations the length may be axially deformed or crushed generally less than 75% of the initial length to provide a generally homogeneous contact surface along the front face of an extension member and the impact face of the reinforcement beam.

The extension member 20 may initially support the impact brace 22 at a rearward angle (FIG. 5A), such as to package the extension member behind the bumper fascia 26, where the rearward angle is generally defined between the front face 20a of the extension member 20 and an impact face 14a of the reinforcement beam 14. With a sufficient magnitude of impact force, such as shown in FIGS. 5B and 5C, the crush can 16 may deform under longitudinal compression forces and displace the reinforcement beam 14 rearward prior to generally any deformation of the impact brace 22. By the crush can 16 initially deforming and the impact brace 22 initially generally maintaining its form, the extension member 20 is forced to bend or pivot forward relative to the reinforcement beam 14, such that the longitudinal extent of the reinforcement beam 14 is moved toward and into alignment with the longitudinal extent of the extension member 20. This initial deformation of the crush can 16 reduces the rearward angle between the front face 20a of the extension member 20 and the impact face 14a of the reinforcement beam 14. Accordingly, when the impact force is above a threshold force, the rearward angle is reduced and may be effectively eliminated between the front face 20a of the extension member 20 and the impact face 14a of the reinforcement beam 14 to from the homogeneous contact surface 24, such as shown in FIG. 5C. In other words, impact brace 22 has a crush profile with a higher initial impact resistance than the crush can 16, where it is understood that the crush profile of the individual component generally corresponds to the displacement characteristics under an applied load, such as shown for an entire bumper assembly in FIG. 7. With the impact brace's crush profile having a higher initial impact resistance than the crush can 16, the impact brace 22 is configured to brace the outboard portion of the extension member 20 to cause less rearward displacement of the outboard portion relative to the inboard portion of the extension member 20 that is supported by the crush can 16, which results in bending of the extension member 20 (at the point of the existing angle) to reduce the rearward angle between the extension member 20 and the reinforcement beam 14.

Further, the impact brace 22 may be configured to deform once the homogenous contact surface 24 is generally formed, such as to deform in a manner that corresponds with the continued deformation of the crush can 16 so as to maintain the homogenous contact surface 24 as impact forces continue to be applied to the bumper assembly, such as shown in FIGS. 5C-5F. To form and maintain the homogenous contact surface 24, the crush can 16 and impact brace 22 may be configured to have cooperating deformation characteristics for corresponding threshold impact loads. Thus, in other words, the crush profile of the impact brace may have a similar or corresponding mid-range impact resistance to the crush can.

The crush cans 16 of the bumper assembly 10 may be embodied in various shape and configurations and constructed with different types of materials, such as steel, aluminum, fiber-reinforced composites, among other materials or combinations thereof. For example, as shown in FIGS. 2-4, the crush can 16 has a tubular can portion 30 that is attached between a front end plate 32 and a rear end plate 34, such as via welding or other suitable means. The can portion 30 of the crush can 16 is shown with a cross-section having a rounded rectangular tube shape. The end plates 32, 34 of the crush can 16 may have an opening 38 that can be used for an assembly access opening or for routing a wire harnesses or the like. The peripheral portion of the rear end plate 34 defines a frame-side flange that is disposed at and circumscribes a rear end of the can portion 30 of the crush can 16. The frame side flange is configured to mount to a frame rail, such as via fasteners that engage mounting apertures 40 that extend through the peripheral portion of the rear end plate 34. The peripheral portion of the front end plate 32 defines a beam-side flange 42 that is attached to a rear-facing surface of the reinforcement beam 14. The upper and lower edges of the beam-side flange 42 protrude forward to form a U-shaped cross-section of the front end plate 32, so as to wrap over the respective upper and lower walls of the reinforcement beam 14.

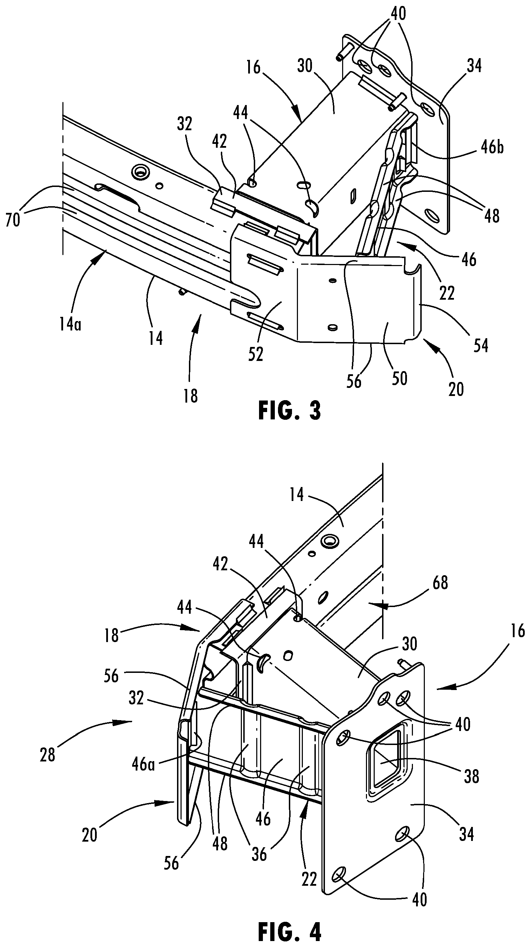

The upper and lower edges are shown in FIGS. 2 and 3 welded to the upper and lower walls of the reinforcement beam 14. It is contemplated that various attachment techniques may be used to mount the crush cans 16 between the reinforcement beam 14 and the frame rails, such as welding, adhesives, fasteners, rivets, or other attachment features or combinations thereof. Further, it is understood that intermediate members, such as gaskets or other plates may be secured between the crush cans and the rear-facing surface of the beam.

The crush cans 16 may include features or formations, such as crush initiators, to configure the crush can 16 for the desired deformation when undergoing compressive impact loads. As shown in FIGS. 3 and 4, the crush can 16 includes crush initiators 44 at corners of the rectangular tube shape that are disposed at the front portion of the crush can 16, near the reinforcement beam 14. Thus, when undergoing compressive forces from an impact along the longitudinal extent of the crush can 16, the crush initiators 44 initiate the initial deformation to occur at the corners and direction the rearward deformation in a generally controlled and linear direction along the longitudinal extent of the crush can 16, such that the crush can 16 initially collapses in an accordion manner so as to effectively shorten the length of the crush can 16, such as shown in FIGS. 5B and 5C. The crush initiators 44 on the crush can 16 are configured to initiate such deformation at the crush imitators 44 on the crush can 16 and prior to deformation of the impact brace 22, such as shown in FIG. 5C where generally no deformation has occurred to the impact brace 22.

With respect to the impact brace 22, the impact brace 22 functions both to reinforce the outboard end portion of the reinforcement beam 14 and to provide a generally homogeneous contact surface 24 for the bumper assembly 10 when undergoing a frontal impact that occurs near the end portion of the reinforcement beam 14. In general, the impact brace 22 directs impact energy or loads received at the extension member 20 along the impact brace 22 to its attachment point at the rear portion of the crush can 16. As shown in FIGS. 3 and 4, the impact brace 22 include an elongated body 46 with a generally planar shape that is substantially vertically oriented. The front end 46a of the elongated body 46 is welded to the extension member 20 and the rear end 46b of the elongated body 46 is welded to the rear portion of the crush can 16, both to the tubular portion 30 and the rear end plate 34. The impact brace 22 also has flanges 48 that protrude outboard from upper and lower edges of the elongated body 46 of the impact brace 22. It is understood that the impact brace may be a tubular shape or another alternatively shaped bracket that provides the supportive connection for the corner reinforcements.

The impact brace 22 is positioned on the bumper assembly 10 to extend rearward and inward from an outboard end portion 18 of the reinforcement beam 14. As shown in FIG. 4, the front end 46a of the impact brace 22 is coupled to the rear surface of the outboard portion 50 of the extension member 20, such that the impact brace 22 extends rearward and inward to attach to the crush can 16 to at the rear end 46b of the impact brace 22. The front attachment location of the impact brace 22 is disposed at a generally centered location between a longitudinal end 54 of the extension member 20 and the end of the reinforcement beam 14. The rear attachment location of the impact brace 22 is disposed at the inside corner connection between the tubular portion 30 and the rear end plate 34a of the crush can 16. In the illustrated example, the impact brace 22 is fixedly attached to the extension member 20 and the crush can 16 via welding; however, it is contemplated that adhesive, fasteners, or another manner of attachment that is capable of supporting the weight of an impact brace at the bumper assembly in other examples.

The impact brace 22 is configured to have a longitudinal stiffness that will withstand the initial impact deformation of the crush can 16, such as shown at FIGS. 5B and 5C. The stiffness of the impact brace 22 during the initial deformation of the crush can 16 may be at least greater than the bending strength of the connection of the extension member 20 to the reinforcement beam 14. More specifically, the impact brace 22 supports the outboard portion 50 of the extension member 20 that extends outboard from the longitudinal end of the reinforcement beam 14. As such, when undergoing frontal impact, the impact brace 22 is configured to reduce the rearward angle between the front face of the extension member 20 and the impact face of the reinforcement beam 14. In the implementation show in FIGS. 2-4, the extension member 20 also has an inboard portion 52 that is attached to the end portion 18 of the reinforcement beam 14, such that the impact brace 22 supports the outboard portion 50 of the extension member 20 as it bends into or toward general alignment with the inboard portion 52 of the extension member 20 when forming the homogeneous contact surface 24 with the reinforcement beam 14.

The impact brace 22 also has a crush initiator 36 disposed at an intermediate section of the elongated body 46. The crush initiator 36 of the impact brace 22 is shown in FIG. 4 as a channel formation that is disposed at an inboard surface of the elongated body 46 and extending vertically between the flanges 48 at the upper and lower edges of the elongated body 46. The crush initiator 36 of the impact brace 22 is configured for the impact brace 22 to deform after the homogeneous contact surface 24 is generally formed. The crush initiator 36 is configured to cause the intermediate portion of the impact brace 22 to bend outward at the crush initiator 36. The crush initiator 36 is configured to cause a front end of the impact brace 22 that is attached to the extension member 20 to move rearward under impact loads at a rate that corresponds with compression of the crush can 16, so as to maintain the general alignment of the extension member and the reinforcement beam 14 that form the homogeneous contact surface 24.

The impact brace 22 may be extruded longitudinally with an aluminum alloy, roll formed with a steel sheet, or pultruded with a fiber-reinforced polymer, among other conceivable forming methods and materials. Likewise, the extension member 20 may be formed with one of such various materials and attached to or integrated with the reinforcement beam 14 with a corresponding attachment means, such as welding, adhesive, fasteners, or the like.

With further reference to FIGS. 2-4, the extension members 20 comprise brackets that are attached to longitudinal ends of the reinforcement beam 14. The inboard portion 52 of the extension member 20 is substantially planar and is attached against the impact face 14a at the end portion 18 of the reinforcement beam 14. As shown in FIG. 5A, the outboard portion 50 of the extension member 20 is initially angle relative to inboard portion 52 of the extension member 20, such as to arrange the front face 20a of the extension member 20 (disposed at the front surface of the generally planar outboard portion 50) at a rearward angle relative to the impact face 14a of the reinforcement beam 14. It is contemplated that in alternative implementations that the extension member may extend outboard as an integral piece of the reinforcement beam, such that the inboard portion may be integrated with the end portion of the reinforcement beam. The extension member 20 may also have curved flanges 56 that protrude rearward from upper and lower edges of the planar portions of the outboard and inboard portions 50, 52 of the extension member. The curved flanges 56 of the inboard portion 52 may wrap over the upper and lower walls of the reinforcement beam 14, such as shown in FIGS. 3 and 4 to attach therewith via a weld.

When undergoing a frontal impact, as shown in FIGS. 5B-5F, the front face 20a of the extension member 20 is directed against the impacted mass and receives the impact forces from the impacted mass. The impact brace 22 supports the outboard portion 50 of the extension member 20 as the crush can 16 deforms to place the front face 20a of the extension member 20 into or toward general alignment with the inboard portion 52 of the extension member 20, which is in generally planar parallel alignment with the impact face 14a of the reinforcement beam 14 to form the homogeneous contact surface 24. The homogenous contact surface 24 provides an even barrier deformation with a generally consistent depth indention by providing continuous front surface along length of reinforcement beam and extension member that extends from the beam, which is also reflected in the load and displacement chart shown in FIG. 7.

The reinforcement beam 14 of the bumper assembly 10 may be embodied in various configurations and materials, such as steel, aluminum, fiber-reinforced composites, among other materials or combinations thereof. In the illustrated examples, such as shown in FIGS. 2-4, the reinforcement beam 14 has a multi-tubular shape that is manufactured by continuously roll forming a high-strength steel sheet to provide a continuous beam that is cut to length to define the ends of the reinforcement beam 14. The roll formed reinforcement beam 14 has two adjacent tubular portions 58, 60 that share a common center wall 62 of the reinforcement beam 14. The common center wall 62 is substantially parallel with the upper and lower walls 64, 66 of the reinforcement beam 14. The tubular portions 58, 60 of the beam 14 also have front walls that are substantially aligned with each other so as to form a forward-facing or impact face 14a (FIG. 3) of the reinforcement beam 14. The rear walls of the tubular portions 58, 60 are also substantially aligned with each other so as to generally form a rear-facing surface 68 (FIG. 4) of the reinforcement beam 14. It is understood that additional embodiments of the beam may assume various shapes and orientations from that illustrated and may include alternatively dimensional proportions, such as for different applications of the beam.

Moreover, the reinforcement beam 14 may be formed with a stiffening rib 70 formed in each of the front walls of the tubular portions 58, 60 of the beam 14, such as shown in FIG. 3. The stiffening ribs 70 protrude into an interior volume of each tubular portion 58, 60 and function to stiffen the forward-facing or impact surface 14a of the beam 14. In other examples, a bumper beam may be is similarly formed, but may have more or fewer stiffening ribs. It is also contemplated that the bumper beam can be made of different strength materials, including AHSS (Advanced High Strength Steels) that have a tensile strength of about 800 to 2000 MPa (i.e. about 120 to 290 ksi) and differently gauged steel sheets, such that have a thickness of about 0.8 mm to 3.0 mm thick, such as approximately between 1 mm and 1.5 mm.

As shown in FIG. 2, the reinforcement beam 14 is curved along a longitudinal extent of the reinforcement beam 14 in order to have the central section protrude forward with a curvature that corresponds with a front end design of a vehicle 12 (FIG. 1) as it spans laterally across the vehicle frame. The radius of longitudinal curvature in additional examples of the bumper assembly may also vary along the length of the bumper beam to further accommodate a front end design. The length of the reinforcement beam 14 is generally equal to or greater than a distance between the vehicle frame rails that support the crush cans 16 of the bumper assembly 10. Thus, the length of the reinforcement beam 14 may terminate at the crush cans 16, such as shown in FIGS. 2-4, or may extend outboard beyond the crush cans in other bumper assemblies.

For purposes of this disclosure, the term "coupled" (in all of its forms, couple, coupling, coupled, etc.) generally means the joining of two components directly or indirectly to one another. Such joining may be stationary in nature or movable in nature; may be achieved with the two components and any additional intermediate members being integrally formed as a single unitary body with one another or with the two components; and may be permanent in nature or may be removable or releasable in nature, unless otherwise stated.

Also for purposes of this disclosure, the terms "upper," "lower," "right," "left," "rear," "front," "vertical," "horizontal," and derivatives thereof shall relate to the orientation shown in FIG. 1. However, it is to be understood that various alternative orientations may be provided, except where expressly specified to the contrary. It is also to be understood that the specific devices and processes illustrated in the attached drawings, and described in this specification are simply exemplary embodiments of the inventive concepts defined in the appended claims. Hence, specific dimensions and other physical characteristics relating to the embodiments disclosed herein are not to be considered as limiting, unless the claims expressly state otherwise.

Changes and modifications in the specifically described embodiments may be carried out without departing from the principles of the present invention, which is intended to be limited only by the scope of the appended claims as interpreted according to the principles of patent law. The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

## Claims

1. A vehicle bumper assembly comprising:
a reinforcement beam (14);
a crush can (16) having a front portion attached to the reinforcement beam;
an extension member (20) attached to an end portion (18) of the reinforcement beam, the extension member having a front face (20a) that is disposed at a rearward angle relative to an impact face (14a) of the reinforcement beam; and
an impact brace (22) comprises an elongated body (46) extending between the extension member and a rear portion of the crush can with a front end (46a) that is attached to the extension member and a rear end (46b) that is attached to the crush can, **characterized in that** the impact brace (22) has
a crush profile with a higher initial impact resistance than the crush can (16), such that the impact brace is configured to reduce the rearward angle between the front face of the extension member and the impact face of the reinforcement beam upon undergoing a frontal impact with a mass that overlaps at least the extension member and the crush can,
wherein the elongated body (46) comprises a crush initiator (36) that is disposed at an intermediate portion of the impact brace (22) between the extension member (20) and the crush can (16), and wherein the crush initiator (36) is configured to cause the intermediate portion of the impact brace (22) to bend outward at the crush initiator (36).

2. The vehicle bumper assembly of claim 1, wherein the impact brace is configured, such that upon undergoing the frontal impact, the rearward angle is reduced to provide a generally homogeneous contact surface (24) at the impacted mass with the front face of the extension member and the impact face of the reinforcement beam.

3. The vehicle bumper assembly of one of the preceding claims, wherein the crush can is configured to deform rearward prior to generally any rearward deformation of the impact brace.

4. The vehicle bumper assembly of one of the preceding claims, wherein the extension member comprises a bracket with a first portion fixed to a front-facing surface of the reinforcement beam and a second portion extending outboard from the end portion of the reinforcement beam.

5. The vehicle bumper assembly of claim 4, wherein the second portion of the extension member is disposed at the rearward angle relative to the first portion of the extension member.

6. The vehicle bumper assembly of claim 5, wherein the crush can is configured to deform rearward prior to the impact brace when undergoing the frontal impact, and wherein the impact brace is configured to deform rearward when first portion of the extension member is generally aligned with the second portion of the extension member.

7. The vehicle bumper assembly of one of the preceding claims, wherein the impact brace comprises an elongated body (46) with a front end (46a) that is attached to the extension member and a rear end (46b) that is attached to the crush can, and wherein the crush can comprises a crush initiator (36) disposed between the reinforcement beam and the rear end of the impact brace that is configured to cause the crush can to deform rearward at the crush initiator prior to deformation of the impact brace.

8. The vehicle bumper assembly of one of the preceding claims, wherein the crush initiator (36) is disposed at an inboard surface of the elongated body.

9. The vehicle bumper assembly of one of the preceding claims, wherein the extension member comprises (i) a generally planar portion extending outboard from the end portion of the reinforcement beam and (ii) curved flanges (56) that protrude rearward from upper and lower edges of the planar portion, and wherein the front face (20a) of the extension member is disposed at the front surface of the generally planar portion.

10. The vehicle bumper assembly of claim 9, wherein the crush can attaches to a rear-facing surface (68) of the reinforcement beam, and wherein the impact brace is attached to a rear surface of the generally planar portion of the extension member at location that is spaced from an attachment location of the crush can.

11. The vehicle bumper assembly of one of the preceding claims, wherein the crush can comprise a can portion (30), a frame-side flange (34) disposed at a rear end of the can portion, and a beam-side flange disposed at a front end of the can portion, the beam-side flange (42) attached to a rear-facing surface of the reinforcement beam.

12. The vehicle bumper assembly of one of the preceding claims, wherein the reinforcement beam comprises at least two tubular portions (58, 60) that extend along a longitudinal length of the reinforcement beam, wherein the tubular portions have aligned rear walls, and wherein the crush can attach to the aligned rear walls of the reinforcement beam.

13. A vehicle bumper assembly comprising:
a reinforcement beam (14);
a crush can (16) attached to the reinforcement beam;
an extension member (20) attached to an end portion (18) of reinforcement beam; and
an impact brace (22) attached between the extension member and a rear portion of the crush can, wherein undergoing a frontal impact with a mass, **characterized in that** the impact brace and crush can are configured to deform rearward in a manner that causes a front face of the extension member (20) to generally align with an impact face of the reinforcement beam to provide a generally homogeneous contact surface (24) at the impacted mass,
wherein the impact brace (22) comprises a crush initiator (36) disposed at an intermediate portion of the impact brace (22) between the extension member (20) and the crush can (16), and wherein the crush initiator (36) is configured to cause a front end of the impact brace (22) that is attached to the extension member (20) to move rearward under impact loads at a rate that corresponds with compression of the crush can, so as to maintain the alignment of the extension member and the reinforcement beam.

14. The vehicle bumper assembly of claim 13, wherein upon undergoing the frontal impact, the crush can is configured to deform rearward prior to generally any rearward deformation of the impact brace, such as to postpone deformation of the impact brace until a longitudinal extent of the reinforcement beam generally aligns with the extension member.

15. The vehicle bumper assembly of claim 14, wherein the crush initiator is disposed at an inboard surface of the elongated body and configured to cause the intermediate portion of the impact brace to bend outward at the crush initiator.

## Patentansprüche

1. Fahrzeug-Stoßfängeranordnung, umfassend:
einen Verstärkungsträger (14);
eine Quetschdose (16), die einen Frontabschnitt aufweist, der am Verstärkungsträger befestigt ist
ein Verlängerungselement (20), das an einem Endabschnitt (18) des Verstärkungsträgers befestigt ist, wobei das Verlängerungselement eine vordere Fläche (20a) aufweist, die in einem rückwärtigen Winkel relativ zu einer Aufprallfläche (14a) des Verstärkungsträgers angeordnet ist; und
eine Aufprallstrebe (22), die einen länglichen Körper (46) umfasst, der sich zwischen dem Verlängerungselement und einem hinteren Abschnitt der Quetschdose mit einem vorderen Ende (46a), das an dem Verlängerungselement befestigt ist, und einem hinteren Ende (46b), das an der Quetschdose befestigt ist, erstreckt, **dadurch gekennzeichnet, dass** die Aufprallstrebe (22) ein Quetschprofil mit einer höheren anfänglichen Aufprallfestigkeit als die Quetschdose (16) aufweist, sodass die Aufprallstrebe so konfiguriert ist, dass sie den rückwärtigen Winkel zwischen der vorderen Fläche des Verlängerungselements und der Aufprallfläche des Verstärkungsträgers verringert, wenn sie einen Frontalaufprall mit einer Masse erfährt, die zumindest das Verlängerungselement und die Quetschdose überlappt,
wobei der längliche Körper (46) einen Quetschungsinitiator (36) umfasst, der an einem Zwischenabschnitt der Aufprallstrebe (22) zwischen dem Verlängerungselement (20) und der Quetschdose (16) angeordnet ist, und wobei der Quetschungsinitiator (36) so konfiguriert ist, dass er bewirkt, dass sich der Zwischenabschnitt der Aufprallstrebe (22) an dem Quetschungsinitiator (36) nach außen biegt.

2. Fahrzeug-Stoßfängeranordnung nach Anspruch 1, wobei die Aufprallstrebe so konfiguriert ist, dass bei einem Frontalaufprall der rückwärtige Winkel verringert wird, um eine im Allgemeinen homogene Kontaktfläche (24) der aufprallenden Masse mit der vorderen Fläche des Verlängerungselements und der Aufprallfläche des Verstärkungsträgers zu schaffen.

3. Fahrzeug-Stoßfängeranordnung nach einem der vorhergehenden Ansprüche, wobei die Quetschdose so konfiguriert ist, dass sie sich nach hinten verformt, bevor sich die Aufprallstrebe überhaupt nach hinten verformt.

4. Fahrzeug-Stoßfängeranordnung nach einem der vorhergehenden Ansprüche, wobei das Verlängerungselement eine Klammer mit einem ersten Abschnitt, der an einer nach vorne weisenden Fläche des Verstärkungsträgers befestigt ist, und einem zweiten Abschnitt, der sich von dem Endabschnitt des Verstärkungsträgers nach außen erstreckt, umfasst.

5. Fahrzeug-Stoßfängeranordnung nach Anspruch 4, wobei der zweite Abschnitt des Verlängerungselements in einem rückwärtigen Winkel relativ zum ersten Abschnitt des Verlängerungselements angeordnet ist.

6. Fahrzeug-Stoßfängeranordnung nach Anspruch 5, wobei die Quetschdose so konfiguriert ist, dass sie sich bei einem Frontalaufprall vor der Aufprallstrebe nach hinten verformt, und wobei die Aufprallstrebe so konfiguriert ist, dass sie sich nach hinten verformt, wenn der erste Abschnitt des Verlängerungselements allgemein mit dem zweiten Abschnitt des Verlängerungselements ausgerichtet ist.

7. Fahrzeug-Stoßfängeranordnung nach einem der vorhergehenden Ansprüche, wobei die Aufprallstrebe einen länglichen Körper (46) mit einem vorderen Ende (46a), das an dem Verlängerungselement befestigt ist, und einem hinteren Ende (46b), das an der Quetschdose befestigt ist, umfasst, und wobei die Quetschdose einen Quetschungsinitiator (36) umfasst, der zwischen dem Verstärkungsträger und dem hinteren Ende der Aufprallstrebe angeordnet ist, der so konfiguriert ist, dass er bewirkt, dass sich die Quetschdose an dem Quetschungsinitiator nach hinten verformt, bevor die Aufprallstrebe verformt wird.

8. Fahrzeug-Stoßfängeranordnung nach einem der vorhergehenden Ansprüche, wobei der Quetschungsinitiator (36) an einer Innenfläche des länglichen Körpers angeordnet ist.

9. Fahrzeug-Stoßfängeranordnung nach einem der vorhergehenden Ansprüche, wobei das Verlängerungselement (i) einen im Allgemeinen ebenen Abschnitt, der sich vom Endabschnitt des Verstärkungsträgers nach außen erstreckt, und (ii) gekrümmte Flansche (56) umfasst, die von den oberen und unteren Kanten des ebenen Abschnitts nach hinten vorstehen, und wobei die vordere Fläche (20a) des Verlängerungselements auf der vorderen Oberfläche des im Allgemeinen ebenen Abschnitts angeordnet ist.

10. Fahrzeug-Stoßfängeranordnung nach Anspruch 9, wobei die Quetschdose an einer nach hinten gerichteten Fläche (68) des Verstärkungsträgers befestigt ist und wobei die Aufprallstrebe an einer hinteren Fläche des allgemein ebenen Abschnitts des Verlängerungselements an einer Stelle befestigt ist, die von einer Befestigungsstelle der Quetschdose beabstandet ist.

11. Fahrzeug-Stoßfängeranordnung nach einem der vorhergehenden Ansprüche, wobei die Quetschdose einen Dosenabschnitt (30), einen rahmenseitigen Flansch (34), der an einem hinteren Ende des Dosenabschnitts angeordnet ist, und einen trägerseitigen Flansch, der an einem vorderen Ende des Dosenabschnitts angeordnet ist, umfasst, wobei der trägerseitige Flansch (42) an einer nach hinten gerichteten Fläche des Verstärkungsträgers befestigt ist.

12. Fahrzeug-Stoßfängeranordnung nach einem der vorhergehenden Ansprüche, wobei der Verstärkungsträger mindestens zwei rohrförmige Abschnitte (58, 60) umfasst, die sich entlang einer Längslänge des Verstärkungsträgers erstrecken, wobei die rohrförmigen Abschnitte ausgerichtete Rückwände aufweisen und wobei die Quetschdose an den ausgerichteten Rückwänden des Verstärkungsträgers befestigt ist.

13. Fahrzeug-Stoßfängeranordnung, umfassend:
einen Verstärkungsträger (14);
eine Quetschdose (16), die an dem Verstärkungsträger befestigt ist;
ein Verlängerungselement (20), das an einem Endabschnitt (18) des Verstärkungsträgers befestigt ist; und
eine Aufprallstrebe (22), die zwischen dem Verlängerungselement und einem hinteren Abschnitt der Quetschdose befestigt ist, wobei ein Frontalaufprall mit einer Masse erfolgt, **dadurch gekennzeichnet, dass** die Aufprallstrebe und die Quetschdose so konfiguriert sind, dass sie sich nach hinten in einer Weise verformen, die bewirkt, dass eine vordere Fläche des Verlängerungselements (20) im Allgemeinen mit einer Aufprallfläche des Verstärkungsträgers fluchtet, um eine im Allgemeinen homogene Kontaktfläche (24) auf der aufprallenden Masse bereitzustellen,
wobei die Aufprallstrebe (22) einen Quetschungsinitiator (36) umfasst, der an einem Zwischenabschnitt der Aufprallstrebe (22) zwischen dem Verlängerungselement (20) und der Quetschdose (16) angeordnet ist, und wobei der Quetschungsinitiator (36) so konfiguriert ist, dass er bewirkt, dass sich ein vorderes Ende der Aufprallstrebe (22), das an dem Verlängerungselement (20) befestigt ist, unter Aufprallbelastungen mit einer Geschwindigkeit nach hinten bewegt, die dem Zusammendrücken der Quetschdose entspricht, um die Ausrichtung des Verlängerungselements und des Verstärkungsträgers beizubehalten.

14. Fahrzeug-Stoßfängeranordnung nach Anspruch 13, wobei die Quetschdose so konfiguriert ist, dass sie sich bei einem Frontalaufprall nach hinten verformt, bevor sich die Aufprallstrebe im Allgemeinen nach hinten verformt, sodass die Verformung der Aufprallstrebe aufgeschoben wird, bis eine Längserstreckung des Verstärkungsträgers im Allgemeinen mit dem Verlängerungselement fluchtet.

15. Fahrzeug-Stoßfängeranordnung nach Anspruch 14, wobei der Quetschungsinitiator an einer Innenfläche des länglichen Körpers angeordnet und so konfiguriert ist, dass er bewirkt, dass sich der Zwischenabschnitt der Aufprallstrebe an dem Quetschungsinitiator nach außen biegt.

## Revendications

1. Assemblage de pare-chocs de véhicule comprenant :
une poutre de renforcement (14) ;
une boîte d'écrasement (16) ayant une portion avant attachée à la poutre de renforcement ;
un élément d'extension (20) attaché à une portion d'extrémité (18) de la poutre de renforcement, l'élément d'extension ayant une face avant (20a) qui est disposée au niveau d'un angle arrière relativement à une face d'impact (14a) de la poutre de renforcement ; et
un renfort d'impact (22) comprenant un corps allongé (46) s'étendant entre l'élément d'extension et une portion arrière de la boîte d'écrasement avec une extrémité avant (46a) qui est attachée à l'élément d'extension et une extrémité arrière (46b) qui est attachée à la boîte d'écrasement,
**caractérisé en ce que** le renfort d'impact (22) a un profil d'écrasement avec une résistance d'impact initial supérieure à la boîte d'écrasement (16) de telle sorte que le renfort d'impact est configuré pour réduire l'angle arrière entre la face avant de l'élément d'extension et la face d'impact de la poutre de renforcement lors d'un impact frontal avec une masse qui recouvre au moins l'élément d'extension et la boîte d'écrasement,
dans lequel le corps allongé (46) comprend un initiateur d'écrasement (36) qui est disposé au niveau d'une portion intermédiaire du renfort d'impact (22) entre l'élément d'extension (20) et la boîte d'écrasement (16), et dans lequel l'initiateur d'écrasement (36) est configuré pour amener la portion intermédiaire du renfort d'impact (22) à fléchir vers l'extérieur au niveau de l'initiateur d'écrasement (36).

2. Assemblage de pare-chocs de véhicule selon la revendication 1, dans lequel le renfort d'impact est configuré de telle sorte que, lors de l'impact frontal, l'angle arrière est réduit pour fournir une surface de contact généralement homogène (24) au niveau de la masse impactée avec la face avant de l'élément d'extension et la face d'impact de la poutre de renforcement.

3. Assemblage de pare-chocs de véhicule selon l'une des revendications précédentes, dans lequel la boîte d'écrasement est configurée pour se déformer vers l'arrière avant généralement toute déformation vers l'arrière du renfort d'impact.

4. Assemblage de pare-chocs de véhicule selon l'une des revendications précédentes, dans lequel l'élément d'extension comprend un support avec une première portion fixée sur une surface tournée vers l'avant de la poutre de renforcement et une seconde portion s'étendant vers l'extérieur depuis la portion d'extrémité de la poutre de renforcement.

5. Assemblage de pare-chocs de véhicule selon la revendication 4, dans lequel la seconde portion de l'élément d'extension est disposée au niveau de l'angle arrière relativement à la première portion de l'élément d'extension.

6. Assemblage de pare-chocs de véhicule selon la revendication 5, dans lequel la boîte d'écrasement est configurée pour se déformer vers l'arrière avant le renfort d'impact lors de l'impact frontal, et dans lequel le renfort d'impact est configuré pour se déformer vers l'arrière quand la première portion de l'élément d'extension est généralement alignée avec la seconde portion de l'élément d'extension.

7. Assemblage de pare-chocs de véhicule selon l'une des revendications précédentes, dans lequel le renfort impact comprend un corps allongé (46) avec une extrémité avant (46a) qui est attachée à l'élément d'extension et une extrémité arrière (46b) qui est attachée à la boîte d'écrasement, et dans lequel la boîte d'écrasement comprend un initiateur d'écrasement (36) disposé entre la poutre de renforcement et l'extrémité arrière du renfort d'impact qui est configuré pour amener la boîte d'écrasement à se déformer vers l'arrière au niveau de l'initiateur d'écrasement avant déformation du renfort d'impact.

8. Assemblage de pare-chocs de véhicule selon l'une des revendications précédentes, dans lequel l'initiateur d'écrasement (36) est disposé au niveau d'une surface intérieure du corps allongé.

9. Assemblage de pare-chocs de véhicule selon l'une des revendications précédentes, dans lequel l'élément d'extension comprend (i) une portion généralement planaire s'étendant vers l'extérieur depuis la portion d'extrémité de la poutre de renforcement et (ii) des brides incurvées (56) qui se projettent vers l'arrière depuis des bords supérieur et inférieur de la portion planaire, et dans lequel la face avant (20a) de l'élément d'extension est disposée au niveau de la surface avant de la portion généralement planaire.

10. Assemblage de pare-chocs de véhicule selon la revendication 9, dans lequel la boîte d'écrasement est attachée à une surface tournée vers l'arrière (68) de la poutre de renforcement, et dans lequel le renfort d'impact est attaché à une surface arrière de la portion généralement planaire de l'élément d'extension à un emplacement qui espacé d'un emplacement d'attache de la boîte d'écrasement.

11. Assemblage de pare-chocs de véhicule selon l'une des revendications précédentes, dans lequel la boîte d'écrasement comprend une portion de boîte (30), une bride côté châssis (34) disposée au niveau d'une extrémité arrière de la portion de boîte, et une bride côté poutre disposée au niveau d'une extrémité avant de la portion de boîte, la bride côté poutre (42) étant attachée à une surface tournée vers l'arrière de la poutre de renforcement.

12. Assemblage de pare-chocs de véhicule selon l'une des revendications précédentes, dans lequel la poutre de renforcement comprend au moins deux portions tubulaires (58, 60) qui s'étendent le long d'une longueur longitudinale de la poutre de renforcement, les portions tubulaires ayant des parois arrière alignées, et dans lequel la boîte d'écrasement est attachée aux parois arrière alignées de la poutre de renforcement.

13. Assemblage de pare-chocs de véhicule comprenant :
une poutre de renforcement (14) ;
une boîte d'écrasement (16) attachée à la poutre de renforcement ;
un élément d'extension (20) attaché à une portion d'extrémité (18) de la poutre de renforcement ; et
un renfort d'impact (22) attaché entre l'élément d'extension et une portion arrière de la boîte d'écrasement, lors d'un impact frontal avec une masse,
**caractérisé en ce que** le renfort d'impact et la boîte d'écrasement sont configurés pour se déformer vers l'arrière d'une manière qui amène une face avant de l'élément d'extension (20) à s'aligner généralement avec une face d'impact de la poutre de renforcement pour fournir une surface de contact généralement homogène (24) au niveau de la masse impactée,
dans lequel le renfort d'impact (22) comprend un initiateur d'écrasement (36) disposé au niveau d'une portion intermédiaire du renfort d'impact (22) entre l'élément d'extension (20) et la boîte d'écrasement (16), et dans lequel l'initiateur d'écrasement (36) est configuré pour amener une extrémité avant du renfort d'impact (22) qui est attachée à l'élément d'extension (20) à se déplacer vers l'arrière sous des charges d'impact à un taux qui correspond à une compression de la boîte d'écrasement, de façon à maintenir l'alignement de l'élément d'extension et de la poutre de renforcement.

14. Assemblage de pare-chocs de véhicule selon la revendication 13, dans lequel, lors de l'impact frontal, la boîte d'écrasement est configurée pour se déformer vers l'arrière avant généralement toute déformation vers l'arrière du renfort d'impact de manière à différer une déformation du renfort impact jusqu'à ce qu'une extension longitudinale de la poutre de renforcement soit généralement alignée avec l'élément d'extension.

15. Assemblage de pare-chocs de véhicule selon la revendication 14, dans lequel l'initiateur d'écrasement est disposé au niveau d'une surface intérieure du corps allongé et est configuré pour amener la portion intermédiaire du renfort d'impact à fléchir vers l'extérieur au niveau de l'initiateur d'écrasement.
